# EUROPEAN PATENT APPLICATION

(11) **EP 1 191 483 A2**
(43) Date of publication of application: **27.03.2002**
(21) Application number: 01122864.0
(22) Date of filing: 24.09.2001
(51) Int. Cl.: G06T 17/00

(54) **Computer aided design system and method for modifying an object**

(30) Priority: 25.09.2000 JP 2000289857; 13.09.2001 JP 2001277538
(71) Applicant: TOYOTA JIDOSHA KABUSHIKI KAISHA, Aichi-ken 471-8571 (JP)
(72) Inventor: Anami, Yasuyuki, c/oToyota Jidosha K.K., Toyota-shi, Aichi-ken, 471-8571 (JP); Nakajima, Hiroshi, c/oToyota Jidosha K.K., Toyota-shi, Aichi-ken, 471-8571 (JP)
(74) Representative: Leson, Thomas Johannes Alois, Dipl.-Ing.

(57) **Abstract**

In order to provide a design support system for facilitating determination of an efficient operation to thereby improve operability, a CPU (11)presents a list including processes selected from process history data, that satisfy a predetermined condition, receives a command designating a process for modification from the list, which serves as a modification candidate process, specifies a process that requires adjustment as a result of the modification applied to the modification candidate process, specifies a procedure for the adjustment, prepares a list including a process specified as requiring adjustment and data on adjustment procedure image according to the procedure for the adjustment specified, and causes a display control section (14) to display the list and the data.

## Description

### BACKGROUND OF THE INVENTION

### Field of the Invention

The present invention relates to computer-aided design (CAD), or a design support system to be executed using a computer, and, in particular, to improvement in the operability thereof.

### Related Arts

In CAD, graphic modeling is generally applied, in which basic graphic elements called primitives may be combined and primitives and combined primitives may be processed as determined in advance. Specifically, in creation of a cube having a round edge, rounding is applied to a part of a cubic primitive. An identical graphic can be created using different processes, such as extrusion using a quarter round.

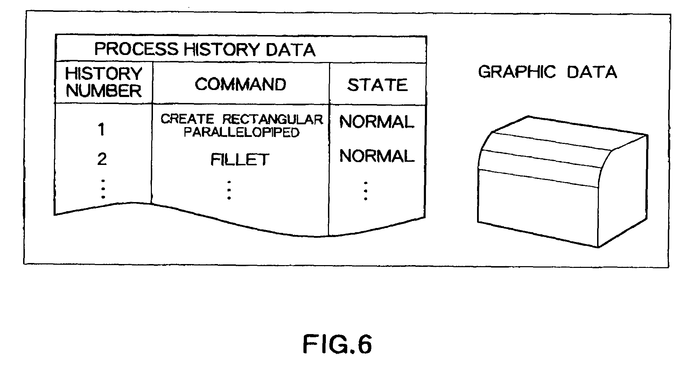

A known conventional CAD system stores process history data, or data concerning a series of processes applied to a primitive, such as creation, arrangement, operation, and so on. The CAD system also stores process history data, as a file shown in Fig. 6, in the form of being associated with data on graphic (graphic data) that is created based on the process history data, for management.

Such a CAD system enables modification of content of past processing. In this case, a process formodification can be specified by placing a cursor on a corresponding shape or part of a graphic shown on a display, and clicking the mouse.

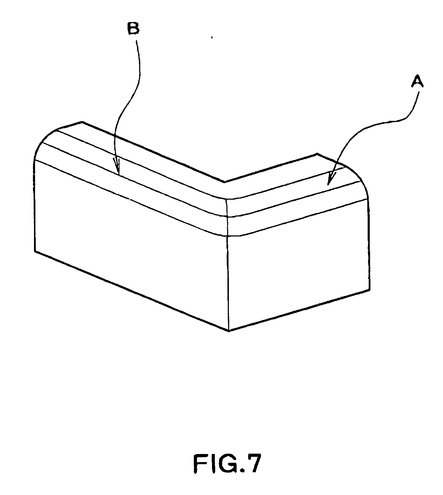

When one modification is made to a part of a graphic, other parts of the graphic may now need adjustment. That is, referring to Fig. 7, the graphic has two adjacent edges A, B, which have been filleted in this order. Once the fillet radius, for example, of the edge A is modified, the edge B also needs adjustment accordingly.

Moreover, fillet surface curvature can be modified using many methods, including one in which a fillet command parameter is changed, and another in which a new fillet shape is formed and attached. That is, the number of steps and procedures required to adjust other parts may vary depending on a manner of modification applied.

However, a user of the conventional CAD system mentioned above is unable to know in advance the number of steps or procedures required to modify a complicated graphic, which naturally has many parts in need of adjustment, even though the number of required steps for adjustment of such a graphic can be enormous depending on a manner of adjustment procedure employed. Therefore, the operator has no idea as to which manner of modification he should employ for efficient modification. This results in low workability of the system.

Further, an operator generally specifies a particular process for modification while referring to a graphic image shown on the display. However, as only an image of a graphic resulting from a series of processes is shown on the display, the operator wishing to specify a particular process for modification must first select an associated graphic, and then follow the relevant process history again before he can specify the process or a modification procedure. This complicates the operation for process selection.

### SUMMARY OF THE INVENTION

The present invention therefore aims to provide a design support system allowing selection of an efficient manner of operation for improved workability.

According to one aspect of the present invention, there is provided (1) a design support system, comprising
a device for holding process history data indicative of a series of processes;
a device for receiving a command designating a particular process for modification as a modification candidate process from among the series of processes; and
a device for modifying the modification candidate process. In this system,
the device for receiving a command presents a list including at least a part of the series of processes to receive a process selected from the list as a modification candidate process.

In this support system, preferably, (2)
the list may selectively include processes, among the series of processes, which meet a predetermined condition.

Further, preferably, (3) the predetermined condition may be at least either whether or not designation of a value parameter is included, whether or not it is related to a predefined command, and whether or not it is designated in advance so as to be included in the list.

According to another aspect of the present invention, there is provided (4) a design support method, comprising the steps of:
holding process history data indicative of a series of processes;
presenting a list including at least a part of the series of processes to receive a process selected from the list as a modification candidate process; and
modifying the modification candidate process.

According to still another aspect of the present invention, there is provided (5) a computer readable recording medium storing a design support program causing a computer to execute the steps of:
holding process history data indicative of a series of processes;
receiving a command designating a particular process for modification as a modification candidate process from among the series of processes; and
modifying the modification candidate process. In this method, a list including at least a part of the series of processes is presented to receive a process selected from the list as amodification candidate process.

According to yet another aspect of the present invention, there is provided (6) a design support system, comprising:
a device for holding process history data indicative of a series of processes;
a device for receiving a command designating a particular process for modification as a modification candidate process from among the series of processes;
a device for specifying a procedure for adjustment that becomes necessary as a result of modification applied to the modification candidate process; and
a device for creating a series of adjustment procedure images according to the procedures for adjustment specified. This design support system displays the adjustment procedure images in response to a command.

When a graphic element for modification is selected, preferably, this modification candidate is presented using a known method, and a procedure for adjustment that becomes necessary as a result of modification to the modification candidate may also be specified and presented. Also preferably, the design support system may further comprise a device for displaying a list for the procedure for adjustment specified.

According to yet another aspect of the present invention, there is provided (8) a design support method comprising the steps of:
managing process history data indicative of a series of processes;
receiving a command designating a particular process for modification as a modification candidate process from among the series of processes;
specifying a procedure for adjustment that becomes necessary as a result of modification applied to the modification candidate process;
creating a series of adjustment procedure images according to the procedures for adjustment specified; and
displaying the adjustment procedure images in response to a command.

According to yet another aspect of the present invention, there is provided (11) a design support system, comprising:
a device for holding process history data indicative of a series of processes;
a device for presenting a list including at least a part of the series of processes;
a device for receiving a process selected from the list as a modification candidate process;
a device for specifying a procedure for adjustment that becomes necessary as a result of modification applied to the modification candidate process; and
a device for creating a series of adjustment procedure images according to the procedures for adjustment specified. This design support system displays the adjustment procedure images in response to a command.

### BRIEF DESCRIPTION OF THE DRAWINGS

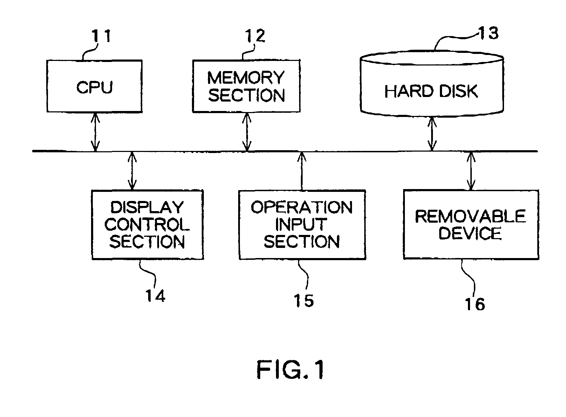

Fig. 1 is a block diagram showing a structure of a design support system in a preferred embodiment of the present invention;
Fig. 2 is a flowchart for a CPU 11 to create an adjustment procedure image;
Fig. 3 is a diagram explaining an example of displaying of an adjustment procedure list;
Fig. 4A is a diagram explaining an example of an adjustment procedure image;
Fig. 4B is a diagram explaining another example of an adjustment procedure image;
Fig. 4C is a diagram explaining still another example of an adjustment procedure image;
Fig. 4D is a diagram explaining still another example of an adjustment procedure image;
Fig. 4E is a diagram explaining still another example of an adjustment procedure image;
Fig. 5 is a diagram explaining an example of an operation panel screen image;
Fig. 6 is a diagram explaining an example of the content of a design data file;
Fig. 7 is a diagram explaining an example of a graphic that requires adjustment; and
Fig. 8 is a flowchart of receiving processing by the CPU 11.

### DESCRIPTION OF THE PREFERRED EMBODIMENT

In the following, a preferred embodiment of the present invention will be described with reference to the accompanied drawings.

A design support system in the embodiment of the present invention basically comprises a CPU 11, a memory section 12, a hard disk 13, a display control section 14, an operation input section 15, and a removable device 16, wherein these sections are mutually connected via a bus. In this embodiment, a device for receiving a command designating a process to be modified (a modification candidate process), a device for specifying a modification procedure, and a device for preparing and presenting an adjustment procedure image and a list for an adjustment procedure are realized using software processing in the CPU 11.

The CPU 11 executes a design support program read from the hard disk 13. That is, the CPU 11 creates process history data depicting respective processes necessary to create graphic data in the order of application thereof, and stores process history data and graphic data created based on the process history data in the form of being associated to each other as a file in the memory section 12 or the hard disk 13 to output the graphic data to the display control section 14. Also, the CPU 11 outputs a list of process history data to the display control section 14.

In response to a modification operation directed to a part of graphic data, the CPU 11 specifies a particular modification candidate process from among the respective processes depicted by the process history data, and outputs a command to the display control section 14 instructing enhanced displaying of the specified modification candidate process. Further, this embodiment is characterized by the fact that the CPU 11 responsive to a command designating a modification candidate process input via the operation input section 15, specifies another part of the graphic data that would require adjustment as a result of the modification made to the modification candidate process, specifies a procedure for the adjustment, and creates a series of image data (adjustment procedure image) describing an adjustment procedure. The operation by the CPU 11 to create an adjustment procedure image will be detailed later.

The memory section 12 serves as a work memory of the CPU 11, and stores process history data and graphic data. In response to a command from the CPU 11, the hard disk 13 associates process history data with the graphic data that is created based on the process history data, and stores these data as a design data file. The hard disk 13 additionally stores a design support program to be executed by the CPU 11.

The display control section 14 comprises a display device, such as a display, and displays graphic data, process history data, and so on, on the display in response to a command from the CPU 11. The operation input section 15, which may be a mouse, a keyboard, and so on, transmits the content of operation by an operator to the CPU 11. The removable device 16 reads data and a program from a computer readable recording medium, and installs them to the hard disk 13.

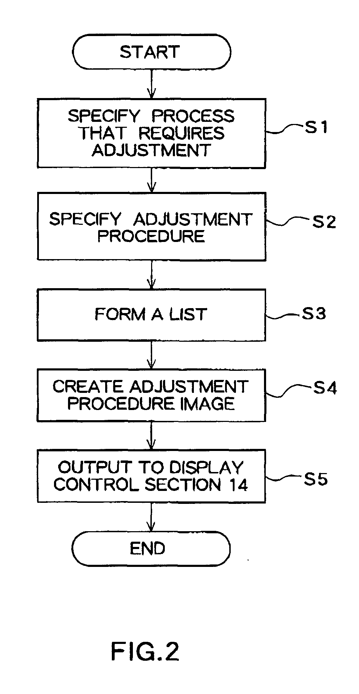

Next, an operation of the CPU 11 to create an adjustment procedure image will be described. Receiving an operator's command designating a modification candidate process, the CPU 11 begins operation for the modification. First, as shown in Fig. 2, the CPU 11 specifies a process that requires adjustment, such as a process including an edge and so on adjacent to the part having been modified, based on relevant process history data (S1). This is achieved by sequentially surveying the processes subsequent to the modification candidate process to determine whether these processes utilize information resulting from the modification candidate process to thereby check whether these processes need adjustment. That is, it is determined that, when one of the adjacent edges is modified, the other edge, which must be formed utilizing the information, such as a fillet radium and so on, associated with the modified edge, requires adjustment. Likewise, it is determined that processes utilizing the information resulting from the adjustment to the process determined as requiring adjustment also requires adjustment.

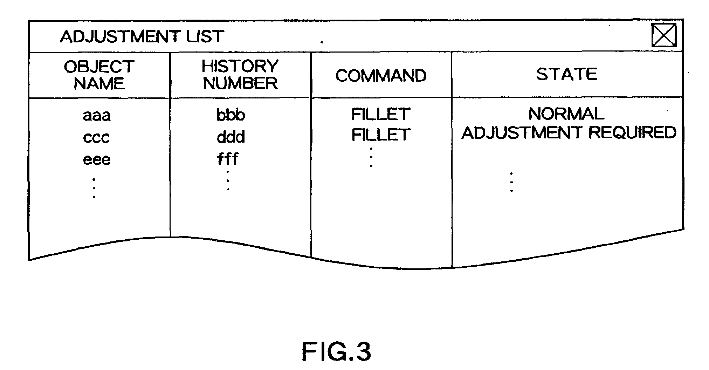

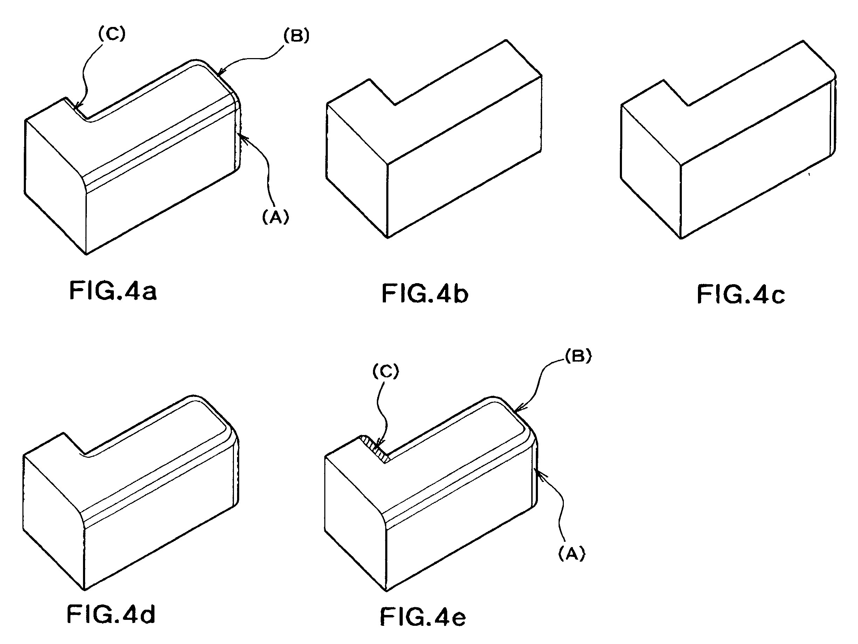

After specification of a process or processes that requires/require adjustment, the CPU 11 specifies an adjustment procedure according to the order of execution of these processes (S2). Then, the CPU 11 prepares a table, as shown in Fig. 3, which includes a graphic element of interest, or a part (an object name), a history number indicative of the number of its position in the process history, a command, and state (normally completed or adjustment required), and outputs the table to the display control section 14 (S3). The CPU 11 then prepares image data (adjustment procedure image) describing an adjustment procedure (S4), and outputs the image to the display control section 14 (S5). Here, specifically, an adjustment procedure image is animation showing respective processes stepwise. Specifically, for a graphic shown in Fig. 4A having a graphic element (A), a graphic element (B), which has a portion adjacent to the element (A), and a graphic element (C), which has a portion adjacent to the element (B), the elements (A), (B), (C) being all filleted, the adjustment procedure image comprises animation, as shown in Fig. 4B to 4E, showing a stepwise procedure to be followed for adjustment of these elements (B), (C) after the modification candidate graphic element (A) has been modified. Note that, whereas a graphic element for adjustment is indicated with diagonal lines in Fig. 4A to 4E, it may be colored for enhanced displaying.

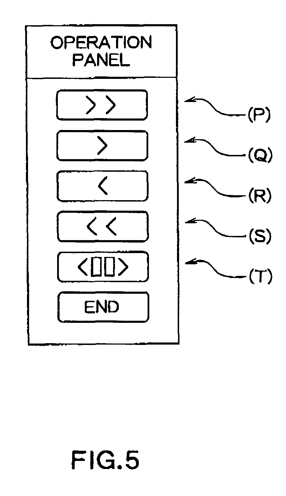

In addition, for displaying the image of a graphic at respective process steps, the display control section 14 may be controlled to display an operation panel, as shown in Fig. 5. The operation panel may have a button P for displaying an image at the last step, a button Q for displaying an image at the next step, a button R for displaying an image at a previous step, a button S for displaying an image at an initial step, a button T for displaying an image at a desired step, and a button END to complete the stepwise image displaying. In order to display an image at a desired step using the button T, the operator may input a number via a keyboard, and so on, or click a mouse over the corresponding item in the list. In response to the button operation, the CPU 11 outputs the adjustment procedure image including stepwise images to the display control section 14 for displaying like a slide show.

### Receiving Procedure

For receiving an operator's command designating a modification candidate process, the CPU 11 provides an interface to the operator so that the operator can designate a modification candidate process. Specifically, the CPU 11 may present at least a part of the list of processes to the operator to encourage the operator to select a process for modification (a modification candidate process) from the list. A part of the list mentioned above may include processes depending on, for example, a shape (or a process serving as a search key) designated by the operator. "Processes depending" refers to processes required to create a designated shape (or a process serving as a search key). Specifically, for a rectangular parallelepiped formed by extruding a rectangular plane, when the operator wishes to fillet a part of one edge thereof, a displayed list after the operator's designation of the shape filleted (or the process of filleting) will include dependent processes, such as (1) formation of a rectangular plane, (2) extrusion, and (3) filleting.

Here, all processes determined as having dependency may exceed 100 steps. Therefore, displaying all of them may make it difficult for the operator to find an aimed process that should be adjusted. In order to address this problem, in this embodiment, only processes that meet predetermined conditions are selected from the list including all dependent processes for presentation as an excerpt list.

Such conditions may include whether a value parameter is included as it is known from experience that a process including designation of a value parameter (such as a coordinate, a graphic size, an amount for extrusions may be adjusted relatively frequently. Some operators may often modify a process relative to a specific command. This is also true with some objects for designing. In such a case, the specific command may be registered in advance so that a process related to the specific command is selectively included in the excerpt list.

It may also preferable that any mark may be attached during the design operation to a process that an operator is likely to modify later, so that all marked processes may be selectively included in the excerpt list. In this case, as for a command with respect to which the operator designates mark attachment during designing operation, the CPU 11 records that fact to relevant process.

These conditions may be used either solely or in combination. Alternatively, an operator may be asked to designate a condition or combination of conditions to be applied in preparation of an excerpt list.

In the following, the CPU's 11 receiving operation will be described.

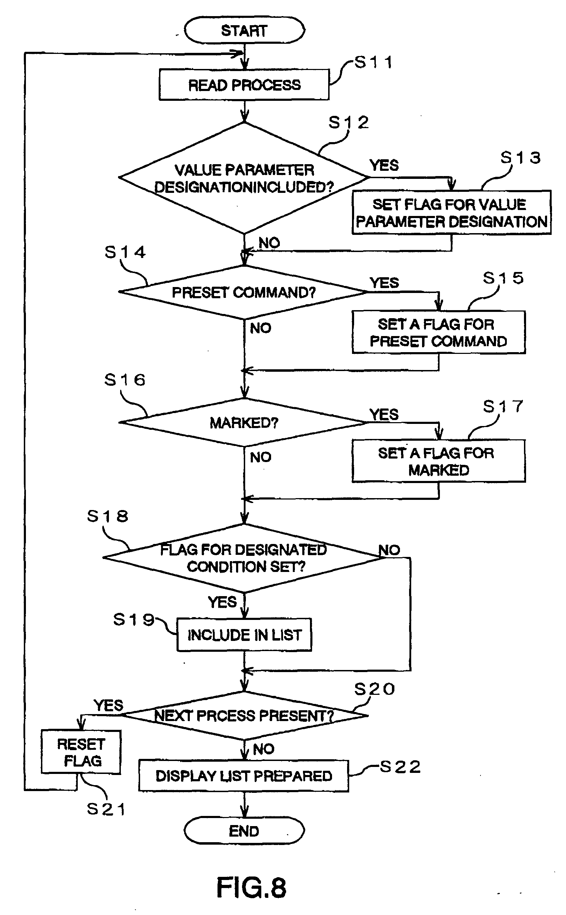

Upon receipt of a command designating a shape being displayed or a process serving as a search key, along with a command to begin modification, the CPU 11 prepares an excerpt list including processes depending on the designated shape or process, and stores the list in the memory section 12. Thereafter, referring to Fig. 8, the CPU 11 sequentially reads dependent processes from the memory section 12 (S11), and determines whether the respective processes include designation of a value parameter (S12). For a process including designation of a value parameter (Yes), a flag indicative of inclusion of value parameter designation is set (S13).

The CPU 11 then determines whether the process read at S11 is related to a preset command (S14). If it is (Yes), a flag indicative of a preset command is set (S15).

Further, the CPU 11 determines whether the process read at S11 includes mark designation (S16). If it does (Yes), a flag indicative of mark designation is set (S17).

Still further, the CPU 11 compares the setting designated by the operator and the respective flags set (S18) to see whether flags indicative of all conditions designated by the operator are set. This process can be easily achieved through provision of two three-bit variables (a flag variable and a mask variable). Specifically, the least significant bit of the flag variable is to be set at S13; the second bit thereof is to be set at S15; the most significant bit thereof is to be set at S17; and one or ones of the bits of the mask variable, which corresponds/correspond to required condition, is/are to be set at 1. That is, an AND operation is conducted between respective bits of the flag variable and of the mask variable at S18. For a bit that is "1" after the AND operation, the relevant condition is determined as satisfied.

When it is determined at S18 that flags relating to the designated conditions are all duly set, the CPU 11 includes the processes read at S11 in the excerpt list (S19). The CPU 11 then determines whether or not there is a process next to be checked (S20). If there is (Yes), the CPU 11 resets the respective flags (S21) before the operation returns to S11, where the next process is read for repetition of the above operation. On the other hand, in the case where there is no next process (No at S20), the prepared excerpt list is output to the display control section 14 for displaying (S22) to thereby complete the operation. In the case where it is determined at S12 that no value parameter designation is included, the operation proceeds to S14. In the case where it is determined at S14 that the process is not related to a preset command, the operation proceeds to S16. In the case where it is determined at S16 that no mark designation is made, the operation proceeds to S18.

As described above, according to a design support system in this embodiment, a list of processes is presented. This facilitates specification of a process by means of reference to the list.

In the above, a condition for determining whether or not to include a process in an excerpt list is designated by an operator. Alternatively, the number of modifications actually made may be counted and recorded for every command type so that a type of command subjected to modification more than a predetermined threshold or a predetermined number of types of commands, counted from that with the largest modification frequencies, may be included in an excerpt list.

Further, the CPU 11 receiving a command for changing a condition for the determination restructures the list for presentation. This allows an operator to switch modes for reference between, for example, one for displaying a list with all processes and one for displaying a list with only processes including value parameter designation. This can facilitate the specification of a modification candidate process.

It should be noted that, should the list be too large to be displayed entirely at S22 within the display screen, any well known interface may be employed for adjustment of the display state such that the list is displayed, for example, in a scrollable manner.

As described above, a design support system in this embodiment can provide improved operability as the operator can realize, though the above-described operations of the CPU 11, the processing volume for adjustment that becomes necessary as a result of modification made to a modification candidate process and that of remaining adjustment at any point after the adjustment has been initiated.

In order to provide a design support system for facilitating determination of an efficient operation to thereby improve operability, a CPU (11)presents a list including processes selected from process history data, that satisfy a predetermined condition, receives a command designating a process for modification from the list, which serves as a modification candidate process, specifies a process that requires adjustment as a result of the modification applied to the modification candidate process, specifies a procedure for the adjustment, prepares a list including a process specified as requiring adjustment and data on adjustment procedure image according to the procedure for the adjustment specified, and causes a display control section (14) to display the list and the data.

## Claims

1. A design support system, comprising:
a device for holding process history data indicative of a series of processes;
a device for receiving a command designating a particular process for modification as a modification candidate process from among the series of processes; and
a device for modifying the modification candidate process;
wherein
the device for receiving a command presents a list including at least a part of the series of processes to receive a process selected from the list as a modification candidate process.

2. A design support system according to claim 1, wherein
the list selectively includes processes among the series of processes, which meet a predetermined condition.

3. A design support system according to claim 2, wherein
the predetermined condition is at least either whether or not designation of a value parameter is included, whether or not it is related to a predefined command, and whether or not it is designated in advance so as to be included in the list.

4. A design support method, comprising the steps of:
holding process history data indicative of a series of processes;
presenting a list including at least a part of the series of processes to receive a process selected from the list as a modification candidate process; and
modifying the modification candidate process.

5. A computer readable recording medium storing a design support program causing a computer to execute the steps of:
holding process history data indicative of a series of processes;
receiving a command designating a particular process for modification as a modification candidate process from among the series of processes; and
modifying the modification candidate process
wherein
a list including at least a part of the series of processes is presented to receive a process selected from the list as a modification candidate process.

6. A design support system, comprising:
a device for holding process history data indicative of a series of processes;
a device for receiving a command designating a particular process for modification as a modification candidate process from among the series of processes;
a device for specifying a procedure for adjustment that becomes necessary as a result of modification applied to the modification candidate process; and
a device for creating a series of adjustment procedure images according to the procedures for adjustment specified;
wherein
the design support system displays the adjustment procedure images in response to a command.

7. A design support system according to claim 6, further comprising a device for displaying a list for the procedure for adjustment specified.

8. A design support method comprising the steps of:
managing process history data indicative of a series of processes;
receiving a command designating a particular process for modification as a modification candidate process from among the series of processes;
specifying a procedure for adjustment that becomes necessary as a result of modification applied to the modification candidate process;
creating a series of adjustment procedure images according to the procedures for adjustment specified; and
displaying the adjustment procedure images in response to a command.

9. A design support method employed in a system for managing process history data indicative of a series of processes, the method comprising the steps of:
inputting a process to serve as a modification candidate process;
specifying a process subjected to influence of modification applied to the modification candidate process by specifying a process associated with the process input from among the series of processes managed by the system; and
displaying the process specified as being subjected to the influence.

10. A computer readable recording medium storing a design support program, the program comprising:
a module for managing process history data indicative of a series of processes;
a module for receiving a command designating a particular process for modification as a modification candidate process from among the series of processes;
a module for specifying a procedure for adjustment that becomes necessary as a result of modification applied to the modification candidate process; and
a module for creating a series of adjustment procedure images according to the procedures for adjustment specified;
wherein
the program displays the adjustment procedure images in response to a command.

11. A design support system, comprising:
a device for holding process history data indicative of a series of processes;
a device for presenting a list including at least a part of the series of processes;
a device for receiving a process selected from the list as a modification candidate process;
a device for specifying a procedure for adjustment that becomes necessary as a result of modification applied to the modification candidate process; and
a device for creating a series of adjustment procedure images according to the procedures for adjustment specified;
wherein
the design support system displays the adjustment procedure images in response to a command.
